(19) Europäisches Patentamt
European Patent Office
Office européen des brevets

(11) EP 3 932 963 A1

(12) **EUROPEAN PATENT APPLICATION**
published in accordance with Art. 153(4) EPC

(43) Date of publication:
**05.01.2022 Bulletin 2022/01**

(21) Application number: **20762338.0**

(22) Date of filing: **20.02.2020**

(51) Int Cl.:
***C08F 283/12*** *(2006.01)* ***C08K 5/19*** *(2006.01)*
***C08L 51/08*** *(2006.01)* ***D06M 13/463*** *(2006.01)*
***D06M 15/643*** *(2006.01)*

(86) International application number:
**PCT/JP2020/006663**

(87) International publication number:
**WO 2020/175300 (03.09.2020 Gazette 2020/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.02.2019 JP 2019035766**

(71) Applicant: **Nissin Chemical Industry Co., Ltd.**
**Fukui 915-0802 (JP)**

(72) Inventors:
- **OTAKI, Shota**
  **Echizen-shi, Fukui 915-0802 (JP)**
- **WATANABE, Kentaro**
  **Echizen-shi, Fukui 915-0802 (JP)**

(74) Representative: **V.O.**
**P.O. Box 87930**
**2508 DH Den Haag (NL)**

(54) **EMULSION COMPOSITION OF (METH)ACRYLIC SILICONE RESIN, FABRIC TREATMENT AGENT CONTAINING SAID COMPOSITION, AND FABRIC TREATED WITH SAID FABRIC TREATMENT AGENT**

(57) One of the purposes of the present invention is to provide an emulsion composition which provides a fiber treatment agent which imparts softness, comfortable touch and water repellency to the treated fiber lasting even after washing, and to provide the fiber treatment agent. The present invention provides an emulsion composition comprising the following components (A) and (B): (A) a (meth)acrylic silicone resin which is a graft polymer of an organopolysiloxane having siloxane units represented by the formula (1) wherein some of group $R^2$ is graft-polymerized with a (meth)acrylate ester, whereby the mass ratio of the organopolysiloxane part to the (meth)acrylate ester part is 34:66 to 99:1; and (B) a cationic surfactant.

EP 3 932 963 A1

## Description

### TECHNICAL FIELD

The present invention relates to an emulsion composition, more specifically an emulsion composition providing a fiber treatment agent which imparts comfortable touch and water repellency, which are specific to a silicone and remain even after washing, to natural fiber or synthetic fiber.

### BACKGROUND ART

Silicone type resin emulsions have been used widely as a fiber treatment agent in the field of fiber treatment.

Silicone type resin emulsions are known for imparting softness, comfortable touch, and water repellency to fiber. For example, Japanese Patent Application Laid-Open No. 2000-96454 describes a fiber treatment agent which comprises dimethyl silicone and silicone rubber powder in combination and imparts softness to fiber. However, the fiber treatment agent has low physical strength and no functional group to chemically adsorb to fiber, resulting in quite poor durability against washing.

Japanese Patent Application Laid-Open No. Sho 57-171769 describes a fiber treatment agent comprising a methyl hydrogen silicone-based resin emulsion. A methyl hydrogen silicone is cross-linked with a crosslinking agent, whereby the fiber treatment agent imparts wash-durable softness and water repellency to fiber. However, it has a drawback that hardness is increased by the crosslinking so as to deteriorate softness or comfortable touch.

Japanese Patent Application Laid-Open No. 2004-10732 describes a fiber treatment agent comprising an acrylic silicone resin composition which is obtained by mixing an acrylic monomer having 12 to 18 carbon atoms and a silicone monomer emulsion and, then, reacting them with an alkoxyvinylsilane. However, the fiber treatment agent has a small silicone content, so that it does not impart sufficient softness and water repellency to fiber.

### PRIOR LITERATURE

### PATENT LITERATURE

Patent Literature 1: Japanese Patent Application Laid-Open No. 2000-96454
Patent Literature 2: Japanese Patent Application Laid-Open No. Sho 57-171769
Patent Literature 3: Japanese Patent Application Laid-Open No. 2004-10732

### SUMMARY OF THE INVENTION

### PROBLEMS TO BE SOLVED BY THE INVENTION

One of the purposes of the present invention is to provide an emulsion composition which provides a fiber treatment agent which imparts softness, comfortable touch and water repellency to the treated fiber lasting even after washing, and to provide the fiber treatment agent.

### MEANS FOR SOLVING THE PROBLEMS

The present inventors conducted keen research to solve the aforesaid problems and have found that the aforesaid problems are solved by an emulsion composition of a (meth)acrylic silicone resin which is obtained by graft-polymerizing an acrylate ester or methacrylate ester on an organopolysiloxane in an organopolysiloxane emulsion obtained by emulsion polymerization in the presence of a cationic surfactant.

That is, the present invention provides an emulsion composition comprising the following components (A) and (B):

(A) a (meth)acrylic silicone resin which is a graft polymer of an organopolysiloxane having siloxane units represented by the following formula (1) wherein some of group $R^2$ is graft-polymerized with a (meth)acrylate ester, whereby the mass ratio of the organopolysiloxane part to the (meth)acrylate ester part is 34:66 to 99:1;

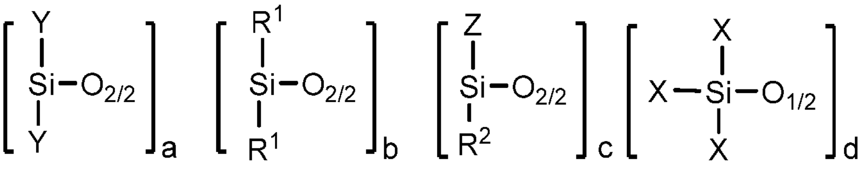

(1)

wherein $R^1$ is, independently of each other, a substituted or unsubstituted, monovalent hydrocarbon group having 1 to 20 carbon atoms; $R^2$ is, independently of each other, an alkenyl group having 2 to 6 carbon atoms or an alkyl group having 1 to 6 carbon atoms in which a part of the hydrogen atoms each bonded to a carbon atom is substituted with a mercapto group, a vinyl group, an acryloxy group, or a methacryloxy group; X is, independently of each other, a substituted or unsubstituted, monovalent hydrocarbon group having 1 to 20 carbon atoms, an alkoxy group having 1 to 20 carbon atoms, or a hydroxyl group; Y is, independently of each other, the group defined for X or a group represented by $-[O-Si(X)_2]_g-X$ wherein g is an integer of 1 to 200, wherein at least two of the groups represented by X and Y are a hydroxyl group; Z is, independently of each other, an alkyl group having 1 to 4 carbon atoms, an alkoxy group having 1 to 4 carbon atoms, or a hydroxyl group; a is a number of 0 or more; b is a number such that the percentage of b per total of a to d is from 45% to less than 100%; c is a number such that the percentage of c per total of a to d is more than 0% to 5% or less; and d is a number such that the percentage of d per total of a to d is from 0% to 50%; and the binding order of the siloxane units in the square brackets is not limited; and
(B) a cationic surfactant.

Further, the present invention provides a method for preparing the emulsion composition and a fiber treatment agent comprising the aforesaid (meth)acrylic silicone resin.

EFFECTS OF THE INVENTION

The agent comprising the emulsion composition according to the present invention is suited for use as a fiber treatment agent because it imparts the wash-durable softness, comfortable touch, and water repellency to fiber.

DETAILED DESCRIPTION OF THE INVENTION

The present invention relates to an emulsion composition characterized in that the emulsion composition comprises (A) a (meth)acrylic silicone resin and (B) a cationic surfactant. The (meth)acrylic silicone resin (A) is obtained by the graft-polymerization of a (meth)acrylate ester on an organopolysiloxane in a specific mass ratio, and the surfactant is cationic, whereby the aforesaid problems are solved. The emulsion composition and the fiber treatment agent according to the present invention will be described in detail below. In the present invention, the term "(meth)acrylate" means an acrylate or methacrylate.

(A) Acrylic silicone resin

Component (A) is an emulsion composition of a (meth)acrylic silicone resin which is a graft polymer of an organopolysiloxane having siloxane units represented by the following formula (1) wherein some of group $R^2$ is graft-polymerized with a (meth)acrylate ester, whereby the mass ratio of the organopolysiloxane part to the (meth)acrylate ester part is 34:66 to 99:1.

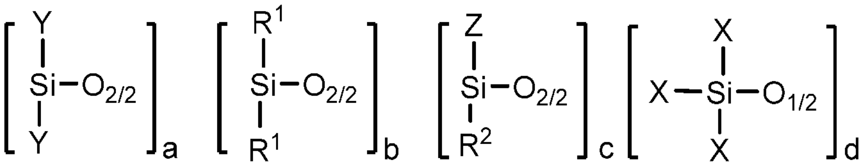

(1)

wherein $R^1$ is, independently of each other, a substituted or unsubstituted, monovalent hydrocarbon group having 1 to 20 carbon atoms; $R^2$ is, independently of each other, an alkenyl group having 2 to 6 carbon atoms or an alkyl group having 1 to 6 carbon atoms in which a part of the hydrogen atoms each bonded to a carbon atom is substituted with a mercapto group, a vinyl group, an acryloxy group, or a methacryloxy group; X is, independently of each other, a substituted or unsubstituted, monovalent hydrocarbon group having 1 to 20 carbon atoms, an alkoxy group having 1 to 20 carbon atoms, or a hydroxyl group; Y is, independently of each other, the group defined for X or a group represented by -[O-

$Si(X)_2]_g$-X wherein g is an integer of 1 to 200, wherein at least two of the groups represented by X and Y are a hydroxyl group; Z is, independently of each other, an alkyl group having 1 to 4 carbon atoms, an alkoxy group having 1 to 4 carbon atoms, or a hydroxyl group; a is a number of 0 or more; b is a number such that the percentage of b per total of a to d is from 45% to less than 100%; c is a number such that the percentage of c per total of a to d is more than 0% to 5% or less; and d is a number such that the percentage of d per total of a to d is from 0% to 50%; and the binding order of the siloxane units in the square brackets is not limited.

In the aforesaid formula (1), $R^1$ is, independently of each other, a substituted or unsubstituted, monovalent hydrocarbon group having 1 to 20 carbon atoms. Examples of the monovalent hydrocarbon group include alkyl groups such as a methyl, ethyl, propyl, butyl, pentyl, hexyl, heptyl, octyl, nonyl, decyl, dodecyl, tetradecyl, hexadecyl, or octadecyl group; cycloalkyl groups such as a cyclopentyl, cyclohexyl or cycloheptyl group; alkenyl groups such as a vinyl and allyl group; aryl groups such as a phenyl, tolyl or naphthyl group; alkenylaryl groups such as a vinylphenyl group; aralkyl groups such as a benzyl, phenylethyl or phenylpropyl group; alkenylaralkyl groups such as a vinylbenzyl or vinylphenylpropyl group; and those groups in which a part or all of the hydrogen atoms are substituted with a halogen atom such as a fluorine, bromine or chlorine, an acryloxy group, a methacryloxy group, a carboxyl group, an alkoxy group, an alkenyloxy group, an amino group, or an alkyl-, alkoxy-, or (meth)acryloxy-substituted amino group. Among these, a methyl group is preferred as $R^1$.

In the formula (1), $R^2$ is, independently of each other, an alkenyl group having 2 to 6 carbon atoms or an alkyl group having 1 to 6 carbon atoms in which a part of the hydrogen atoms each bonded to a carbon atom is substituted with a mercapto group, a vinyl group, an acryloxy group, or a methacryloxy group. The alkenyl group having 2 to 6 carbon atoms is preferably a vinyl group. More preferably, $R^2$ is an alkyl group having 1 to 6 carbon atoms in which a part of the hydrogen atoms each bonded to a carbon atom is substituted with a mercapto group, an acryloxy group, or a methacryloxy group, or a vinyl group. Further preferably, $R^2$ is a mercaptopropyl group, an acryloxypropyl group, a methacryloxypropyl group, or a vinyl group.

In the formula (1), X is, independently of each other, a substituted or unsubstituted, monovalent hydrocarbon group having 1 to 20 carbon atoms, an alkoxy group having 1 to 20 carbon atoms, or a hydroxyl group. Examples of the substituted or unsubstituted, monovalent hydrocarbon group having 1 to 20 carbon atoms are those mentioned for $R^1$. Examples of the alkoxy group having 1 to 20 carbon atoms include a methoxy, ethoxy, propoxy, butoxy, hexyloxy, heptyloxy, octyloxy, decyloxy and tetradecyloxy group. X is preferably a hydroxyl group, a methyl group, a butyl group, and a phenyl group.

Y is, independently of each other, the group defined for X or a group represented by $-[O-Si(X)_2]_g$-X, wherein at least two of the groups represented by X and Y are a hydroxyl group, wherein g is an integer of 1 to 200, preferably 1 to 50.

Z is, independently of each other, an alkyl group having 1 to 4 carbon atoms, an alkoxy group having 1 to 4 carbon atoms, or a hydroxyl group, preferably a hydroxyl group or a methyl group.

In the formula (1), a is a number of 0 or more, preferably a number such that the percentage of "a" per total of a to d is 0% or more and 0.1% or less, more preferably 0 to 0.05%; b is a number such that the percentage of b per total of a to d is from 45% to less than 100%, preferably 70 to 99.9%, more preferably 90 to 99.9%, further preferably 95 to 99.8%; c is a number such that the percentage of c per total of a to d is more than 0% to 5% or less, preferably 0.01 to 0.15%, more preferably 0.05 to 0.1%; and d is a number such that the percentage of d per total of a to d is from 0% to 50%, preferably 0.01 to 1%, more preferably 0.02 to 0.50 %. In the aforesaid organopolysiloxane, $R^2$ is a group reactive with a (meth)acrylate ester which will be described below and is characterized in that the percentage in number of the siloxane unit having the $R^2$ (that is, the percentage of c) among the siloxane units is more than 0% and 5% or less, preferably 0.01 to 0.15%, more preferably 0.05 to 0.1%. The organopolysiloxane having the unit represented by the aforesaid formula (1) may be branched and may contain, in addition to the units D and M, a unit T ($RSiO_{3/2}$) and a unit Q ($SiO_{4/2}$) as long as the effects of the present invention are not detracted. A linear organopolysiloxane composed only of the units D and M is preferred.

The organopolysiloxane represented by the aforesaid formula (1) preferably has a weight average molecular weight of 10,000 to 500,000, more preferably 30,000 to 350,000. The weight average molecular weight (Mw) in the present invention is determined by gel permeation chromatography (GPC) with polystyrene as a standard substance.

The aforesaid organopolysiloxane is preferably in a form of emulsion. The organopolysiloxane emulsion may be a commercial product or may be prepared in-house. A surfactant contained in the organopolysiloxane emulsion is preferably a cationic surfactant and/or nonionic surfactant. A cationic surfactant is preferred.

A method for preparing the organopolysiloxane emulsion using a cationic surfactant may be conducted according to any known emulsion polymerization method. For example, a cyclic organosiloxane which may have a fluorine atom, a (meth)acryloxy group, a carboxyl group, a hydroxyl group or an amino group, or an $\alpha,\omega$-dihydroxysiloxane oligomer, an $\alpha,\omega$-dialkoxysiloxane oligomer or an alkoxysilane, and a silane coupling agent represented by the following formula (2) are emulsified in water (e.g., ion-exchanged water or pure water) in the presence of a cationic surfactant and then, if needed, a catalyst such as an alkali is added, and a polymerization reaction is caused to easily obtain the organopolysiloxane emulsion.

$$R^2_{(4-e-f)}R^4_fSi(OR^5)_e \qquad (2)$$

In the formula (2), $R^2$ is a monovalent organic group having a polymerizable double bond and may be an alkenyl group having 2 to 6 carbon atoms, or an alkyl group having 1 to 6 carbon atoms in which a part of the hydrogen atoms is substituted with a mercapto group, a vinyl group, an acryloxy group, or a methacryloxy group. Preferred is an acryloxy- or methacryloxy-substituted alkyl group having 1 to 6 carbon atoms. $R^4$ is an alkyl group having 1 to 4 carbon atoms, $R^5$ is an alkyl group having 1 to 4 carbon atoms, e is an integer of 2 or 3 and f is an integer of 0 or 1, with the proviso that e+f = 2 or 3.

Examples of the cyclic organosiloxane (a-1) include hexamethylcyclotrisiloxane (D3), octamethylcyclotetrasiloxane (D4), decamethylcyclopentasiloxane (D5), dodecamethylcyclohexasiloxane (D6), 1,1-diethylhexamethylcyclotetrasiloxane, phenylheptamethylcyclotetrasiloxane, 1,1-diphenylhexamethylcyclotetrasiloxane, 1,3,5,7-tetravinyltetramethylcyclotetrasiloxane, 1,3,5,7-tetramethylcyclotetrasiloxane, 1,3,5,7-tetracyclohexyltetramethylcyclotetrasiloxane, tris(3,3,3-trifluoropropyl)trimethylcyclotrisiloxane, 1,3,5,7-tetra(3-methacryloxypropyl)tetramethylcyclotetrasiloxane, 1,3,5,7-tetra(3-acryloxypropyl)tetramethylcyclotetrasiloxane, 1,3,5,7-tetra(3-carboxypropyl)tetramethylcyclotetrasiloxane, 1,3,5,7-tetra(3-vinyloxypropyl)tetramethylcyclotetrasiloxane, 1,3,5,7-tetra(p-vinylphenyl)tetramethylcyclotetrasiloxane, 1,3,5,7-tetra[3-(p-vinylphenyl)propyl]tetramethylcyclotetrasiloxane, 1,3,5,7-tetra(N-acryloyl-N-methyl-3-aminopropyl)tetramethylcyclotetrasiloxane, and 1,3,5,7-tetra(N,N-bis(lauroyl)-3-aminopropyl)tetramethylcyclotetrasiloxane. Preferred are octamethylcyclotetrasiloxane and decamethylcyclopentasiloxane.

Examples of the silane coupling agent (a-2) include vinylsilanes such as vinyltrimethoxysilane, vinyltriethoxysilane, vinyltripropoxysilane, vinyltriisopropoxysilane, vinylmethyldimethoxysilane and vinylmethyldiethoxysilane; acrylsilanes such as γ-(meth)acryloxypropyltrimethoxysilane, γ-(meth)acryloxypropyltriethoxysilane, γ-(meth)acryloxypropyltripropoxysilane, γ-(meth)acryloxypropyltriisopropoxysilane, γ-(meth)acryloxypropyltributoxysilane, γ-(meth)acryloxypropylmethyldimethoxysilane, γ-(meth)acryloxypropylmethyldiethoxysilane, γ-(meth)acryloxypropylmethyldipropoxysilane, γ-(meth)acryloxypropylmethyldiisopropoxysilane, and γ-(meth)acryloxypropylmethyldibutoxysilane; and mercaptosilanes such as γ-mercaptopropylmethyldimethoxysilane and γ-mercaptopropyltrimethoxysilane. In addition, oligomers obtained by the condensation polymerization of the aforesaid silane coupling agent are sometimes preferred because generation of an alcohol is suppressed. The term "(meth)acryloxy" means acryloxy or methacryloxy.

The silane coupling agent (a-2) is reacted with cyclic organosiloxane (a-1) preferably in an amount of 0.01 to 10 parts by mass, more preferably 0.01 to 5 parts by mass, relative to 100 parts by mass of the cyclic organosiloxane (a-1). If the amount is less than the aforesaid lower limit, the transparency of the emulsion composition as a coating agent may be worse. If the amount is larger than the aforesaid upper limit, smooth feeling may not be attained.

The organopolysiloxane represented by the following formula (1) is obtained by the copolymerization of the silane coupling agent with the cyclic organosiloxane. On account of the $[R^2ZSiO_{2/2}]$ unit in the following formula (1), a (meth)acrylate ester monomer (b) or other polymerizable monomer (c), which will be described below, can graft-polymerize to the organopolysiloxane.

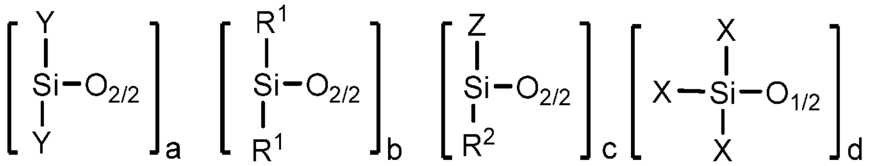

(1)

Any known polymerization catalysts may be used for the emulsion polymerization. Particularly, a strong alkali is preferred, such as sodium hydroxide, potassium hydroxide and tetraethylammonium chloride. Potassium hydroxide is preferred. The amount of the alkali catalyst is preferably 0.01 to 10 parts by mass, more preferably 0.2 to 2 parts by mass, relative to 100 parts by mass of the cyclic organosiloxane.

Examples of the cationic surfactant to be used in the aforesaid emulsion polymerization include lauryltrimethylammonium chloride, cetyltrimethylammonium chloride, stearyltrimethylammonium chloride, lauryldimethylbenzylammonium chloride, and didecyldimethylammonium chloride. The amount of the cationic surfactant is preferably 0.1 to 20 parts by mass, more preferably 0.5 to 10 parts by mass, per 100 parts by mass of the cyclic organosiloxane (a-1) as a raw material. The polymerization temperature is preferably 50 to 75°C and the polymerization time is preferably 10 hours or more, more preferably 15 hours or more. Further, the reaction mixture is preferably aged at 5 to 50°C for 10 hours or more after the polymerization. A nonionic surfactant may be used in combination with the cationic surfactant in the emulsion polymerization.

In the present invention, an acrylate ester or a methacrylate ester (which may be hereinafter referred to as "acrylic component") is an acrylate or methacrylate ester monomer not having any functional group such as a hydroxyl

group, an amide group or a carboxyl group. An alkyl(meth)acrylate ester with an alkyl group having 1 to 10, preferably 1 to 6 carbon atoms is preferred. Further preferred is a monomer whose polymer has a glass transition temperature (which may be hereinafter referred to as "Tg") of 40°C or higher, preferably 60°C or higher. Examples of the (meth)acrylate ester include methyl(meth)acrylate, isopropyl(meth)acrylate, ethyl(meth)acrylate, and cyclohexyl (meth)acrylate. The upper limit of the Tg is preferably 200°C or lower, more preferably 150°C or lower. The glass transition temperature may be determined according to the Japanese Industrial Standards (JIS) K 7121.

The acrylic silicone resin emulsion of the present invention is preferably obtained by the graft-polymerization of the aforesaid (meth)acrylate ester monomer (b) on the organopolysiloxane in the aforesaid organopolysiloxane emulsion (a). Optionally, other polymerizable monomer (c), which will be described below, may also be graft-polymerized.

In the graft polymerization of the (meth)acrylate ester with the group represented by $R^2$ of the organopolysiloxane, the mass ratio of the organopolysiloxane to the (meth)acrylate ester is 34:66 to 99:1, preferably 60:40 to 95:5. If the ratio of the organopolysiloxane is less than the aforesaid lower limit, the acrylic silicone resin emulsion thus obtained does not have sufficient softness. In the graft-polymerization reaction in the present invention, almost all of the (meth)acrylate ester reacts with the group represented by $R^2$ of the organopolysiloxane. Therefore, the percentage of the (meth)acrylate ester is 1 to 66 mass%, preferably 5 to 40 mass%, based on the total mass of the resulting acrylic silicone resin.

A monomer (c) other than the component (b), which monomer has a functional group copolymerizable with the group represented by $R^2$ in the organopolysiloxane, may be grafted on the organopolysiloxane. Examples of the monomer (c) include unsaturated monomers having a carboxyl group, an amide group, a hydroxyl group, a vinyl group or an allyl group. Specifically, the examples include methacrylic acid, acrylic acid, acrylamide, allyl methacrylate, vinyl methacrylate, 2-hydroxyethyl methacrylate, and 2-hydroxypropyl methacrylate. On account of the copolymerization of the aforesaid monomer (c) on the present acrylic silicone resin, the resulting emulsion has increased adsorbability to the fiber and further improved washing resistance of the fiber.

A radical initiator is preferably used for the emulsion graft-polymerization. Examples of the radical initiator include persulfates such as potassium persulfate and ammonium persulfate, hydrogen persulfate water, t-butyl hydroperoxide, and hydrogen peroxide. If necessary, a redox catalyst may be used, wherein a reducing agent is used together, such as sodium hydrogen sulfite, Rongalite, L-ascorbic acid, tartaric acid, a saccharide, or an amine. The amounts of the radical initiator and the catalyst are not limited, and may be an effective amount to make the graft-polymerization proceed. The amount may be set according to the conventional manner.

The organopolysiloxane to be subjected to the graft-polymerization in the present invention is preferably in the form of emulsion as described above. Therefore, the emulsion graft-polymerization may be carried out only with a surfactant included in the organopolysiloxane emulsion. However, a cationic surfactant or a nonionic emulsifying agent is preferably further added to the graft-polymerization mixture in order to improve its stability. Examples of the cationic surfactant include, as described above, lauryltrimethylammonium chloride, cetyltrimethylammonium chloride, stearyltrimethylammonium chloride, lauryldimethylbenzylammonium chloride, and didecyldimethylammonium chloride. Examples of the nonionic surfactant include polyoxyethylene lauryl ether and polyoxyethylene tridecyl ether. When the organopolysiloxane to be subjected to the graft-polymerization is not in the form of emulsion, the organopolysiloxane is emulsified using a surfactant by a homomixer in advance and, then, the graft-polymerization may be conducted.

The amount of the surfactant is 1 part by mass to 15 parts by mass, preferably 2 to 10 parts by mass, more preferably 2 to 7 parts by mass, relative to 100 parts by mass of the (meth)acrylic silicone resin (A). When the organopolysiloxane is emulsified using a surfactant by a homomixer in advance, the total amount of the surfactant (B) to be contained in the resulting (meth)acrylic silicone resin-comprising emulsion composition may be adjusted to 1 part by mass to 15 parts by mass, preferably 2 to 10 parts by mass, more preferably 2 to 7 parts by mass, relative to 100 parts by mass of the (meth)acrylic silicone resin (A). When the cationic surfactant and the nonionic surfactant are used in combination, the total amount of the surfactants may be adjusted to satisfy the aforesaid range.

The temperature in the graft-polymerization of the components (b) and (c) on the component (a) is preferably 5 to 75°C, more preferably 25 to 50°C. The polymerization time is preferably 2 to 8 hours, more preferably 3 to 6 hours.

Further, a chain-transfer agent may be added to adjust the molecular weight of the graft polymer and the degree of grafting.

The (meth)acrylic silicone resin emulsion obtained by the aforesaid graft-polymerization is the emulsion composition of the polymer having (meth)acrylate ester moieties randomly graft-polymerized with the $[R^2ZSiO_{2/2}]$ units of the organopolysiloxane. For example, the (meth)acrylic silicone resin is represented by the following formula (1').

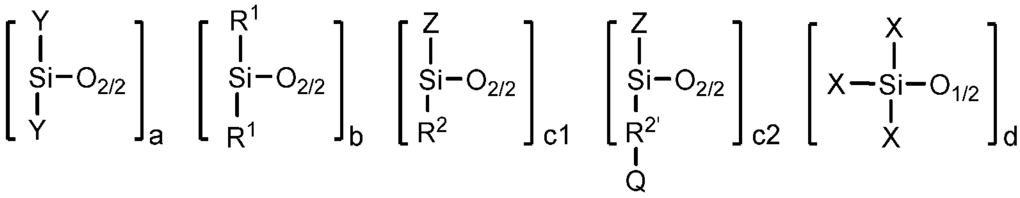

(1')

wherein $R^1$, $R^2$, X, Y, Z, a, b and d are as described above, Q is a (meth)acrylate ester residue, and c1 + c2 is larger than 0% and 5% or less of the total number, (a to d), of the siloxane units. The binding order of the aforesaid siloxane units is not limited. As described above, the percentage of the (meth)acrylate ester (Q) is 1 to 66 mass %, preferably 5 to 40 mass%, based on the total mass of the (meth)acrylic silicone resin.

The solid content (content of the (meth)acrylic silicone resin) in the emulsion composition is preferably 25 to 50 mass%, more preferably 30 to 47 mass%, relative to the mass of the emulsion composition. The viscosity at 25°C is preferably 500 mPa·s or less, more preferably 50 to 500 mP·s. The viscosity may be determined by a rotational viscometer. The dispersion medium in the emulsion composition is not particularly limited and may be, for example, ion-exchanged water or pure water. The average particle size of the emulsion is preferably 0.1 μm (100 nm) to 0.5 μm (500 nm), more preferably 0.15 μm (150 nm) to 0.3 μm (300 nm). In the present invention, the particle size of the emulsion is determined by a laser diffraction particle size analyzer as the cumulative mass-average diameter $D_{50}$.

The (meth)acrylic silicone resin emulsion composition is preferably diluted with ion-exchanged water or pure water to prepare the fiber treatment agent. The amount of the (meth)acrylic silicone resin emulsion is, such as to attain a solid content (resin content), of 1 to 40 mass%, preferably 2 to 30 mass%, most preferably 5 to 30 mass% in the fiber treatment agent. If the amount of the (meth)acrylic silicone resin is less than the 1 mass% lower limit, wear resistance is not improved, which is disadvantageous. If the amount is larger than 40 mass%, whitening as well as deterioration in wear resistance occur.

The fiber-treating composition of the present invention may comprise deodorants, antioxidants, coloring agents, ultraviolet absorbers, light stabilizers, antistatic agents, plasticizers, flame retardants, thickeners, film-forming aid, organic solvents and other resins as long as the effects of the present invention are not detracted.

Examples of the fiber include natural fiber such as cotton, linseed, linen, wool, silk, cashmere and asbestos, and chemical fiber such as polyamide, polyester, viscose, cellulose, glass and carbon and, further, fiber products such as fabrics, knits, non-woven cloths, films, and paper. The treated fiber is dried preferably by being left at room temperature for 10 minutes to several tens of hours or forcibly dried at a temperature of 20 to 150°C for 0.5 minutes to 5 hours.

The method of applying the present fiber-treating composition to the fiber is not particularly limited and includes applications by various coaters such as gravure coater, bar coater, blade coater, roll coater, air knife coater, screen coater, curtain coater or brushing; spray coating; and dipping.

The amount of the present fiber-treating composition to be applied to fiber is not particularly limited but preferably in a range of 1 to 300 g/$m^2$, more preferably 10 to 200 g/$m^2$, as a solid content, in view of softness and water repellency, and the thus-treated fiber is preferably left at room temperature for 10 minutes to several tens of hours or forcibly dried at a temperature of 20 to 150°C for 0.5 minutes to 5 hours.

## EXAMPLES

The present invention will be explained below in further detail with reference to a series of the Examples and the Comparative Examples, though the present invention is in no way limited by these Examples. In the following Examples and Comparative Examples, "part" or "parts" mean part or parts by mass, and "%" means mass%.

[Preparation Example 1]

To a 2-L polyethylene beaker was added 420 g of octamethylcyclotetrasiloxane (D4), 0.34 g of γ-methacryloxypropylmethyldiethoxysilane ("KBM-502", ex Shin-Etsu Chemical Co., Ltd.), 8.4 g of NIKKOL BC-20 (polyoxyethylene alkyl ether containing an effective component of 100%, ex Nikko Chemicals Co., Ltd.), 58.8 g of Catiogen TMS (steartrimonium chloride containing an effective component of 25%, ex DKS Co. Ltd.), 2.8 g of Quartamin D86P (distearyl dimethyl ammonium chloride containing an effective component of 75%, ex Kao Co.), 2.1 g of calcium hydroxide and 342 g of ion-exchanged water, and emulsified uniformly by a homomixer. Then, the resulting emulsion was diluted by gradually adding 150 g of ion-exchanged water. The diluted solution was passed through a high-pressure homogenizer

twice at a pressure of 300 kgf/cm$^2$ to obtain a uniform white emulsion. The resulting emulsion was transferred to a 2-L glass flask equipped with a stirrer, a thermometer and a reflux condenser, subjected to a polymerization reaction at 50 to 70°C for 48 hours and neutralized to a pH of 6 to 8 with 19 g of an aqueous 10% solution of acetic acid. A small amount of a sample of the emulsion was dried at 105°C for 3 hours to find a non-volatile content (solid content) of 39.6%. The solid of about 372 g precluding the amount of surfactant in the emulsion was the amount of the organopolysiloxane. The organopolysiloxane thus obtained had a structure represented by the following formula (2):

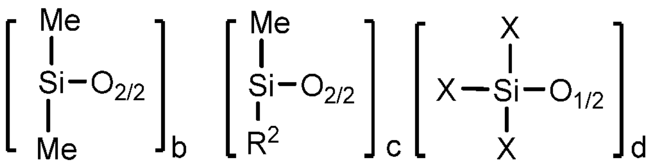
(2)

wherein b is 99.87, c is 0.08, d is 0.05, X is a hydroxyl group or a methyl group and $R^2$ is a γ-methacryloxypropyl group.

[Example 1]

To the emulsion of the organopolysiloxane (2) was added 88 g of pure water, to which 159 g of methyl methacrylate (MMA) was then added dropwise over 3 to 5 hours, while causing a redox reaction between a peroxide and a reducing agent at 30°C to graft-polymerize the acrylate. Thus, an acrylic silicone resin emulsion composition having a non-volatile content of 44.5% was obtained. According to analysis by GPC, it was confirmed that the product thus obtained was an acrylic graft copolymer and the emulsion composition comprised the cationic surfactant. The amount of the surfactant in the emulsion composition is 3.2 g, relative to 100 g of the acrylic silicone resin.

[Preparation Example 2]

To a 2-L polyethylene beaker was added 420 g of octamethylcyclotetrasiloxane, 0.34 g of γ-methacryloxypropylmethyldiethoxysilane ("KBM-502", ex Shin-Etsu Chemical Co., Ltd.), 8.4 g of NIKKOL BC-20, 58.8 g of Catiogen TMS, 2.8 g of Quartamin D86P, 2.1 g of calcium hydroxide and 342 g of ion-exchanged water. Then, the mixture was diluted by gradually adding 150 g of ion-exchanged water and emulsified uniformly by a homomixer. The resulting emulsion was passed through a high-pressure homogenizer twice at a pressure of 300 kgf/cm$^2$ to obtain a uniform white emulsion. The resulting emulsion was transferred to a 2-L glass flask equipped with a stirrer, a thermometer and a reflux condenser, subjected to a polymerization reaction at 50 to 70°C for 48 hours, and neutralized to a pH of 6 to 8 with 12 g of an aqueous 10% solution of acetic acid. A small amount of a sample of the emulsion was dried at 105°C for 3 hours to find a non-volatile content (solid content) of 39.6%. The solid of about 372 g precluding the amount of surfactant in the emulsion was the amount of the organopolysiloxane. The organopolysiloxane thus obtained had a structure represented by the following formula (3):

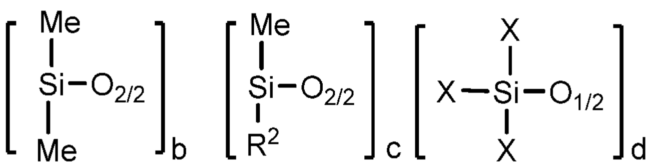
(3)

wherein b=99.87, c=0.08, d=0.05, X is a hydroxyl group or a methyl group and $R^2$ is a γ-methacryloxypropyl group.

[Example 2]

To the emulsion of the organopolysiloxane (3), 20 g of butyl acrylate (BA) was added dropwise over 3 to 5 hours, while causing a redox reaction between a peroxide and a reducing agent at 30°C to graft-polymerize the acrylate. Thus, an acrylic silicone resin emulsion composition having a non-volatile content of 40.7% was obtained. According to analysis by GPC, it was confirmed that the product thus obtained was an acrylic graft copolymer and the emulsion composition comprised the cationic surfactant. The amount of the surfactant in the emulsion composition is 4.1 g, relative to 100 g of the acrylic silicone resin.

[Preparation Example 3]

To a 2-L polyethylene beaker was added 420 g of octamethylcyclotetrasiloxane, 0.34 g of γ-methacryloxypropylmethyldiethoxysilane ("KBM-502", ex Shin-Etsu Chemical Co., Ltd.), 8.4 g of NIKKOL BC-20, 58.8 g of Catiogen TMS, 2.8 g of Quartamin D86P, 2.1 g of calcium hydroxide and 342 g of ion-exchanged water, and emulsified uniformly by a homomixer. Then, the resulting emulsion was diluted by gradually adding 150 g of ion-exchanged water. The diluted solution was passed through a high-pressure homogenizer twice at a pressure of 300 $kgf/cm^2$ to obtain a uniform white emulsion. The resulting emulsion was transferred to a 2-L glass flask equipped with a stirrer, a thermometer and a reflux condenser, subjected to a polymerization reaction at 50 to 70°C for 24 hours, and neutralized to a pH of 6 to 8 with 19 g of an aqueous 10% solution of acetic acid. A small amount of a sample of the emulsion was dried at 105°C for 3 hours to find a non-volatile content (solid content) of 39.6%. The solid of about 372 g precluding the amount of surfactant in the emulsion was the amount of the organopolysiloxane. The organopolysiloxane thus obtained had a structure represented by the following formula (4):

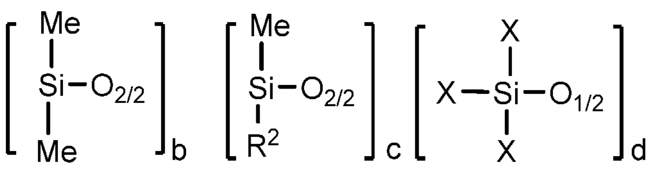
(4)

wherein b is 99.87, c is 0.08, d is 0.05, X is a hydroxyl group or a methyl group and $R^2$ is a γ-methacryloxypropyl group.

[Example 3]

To the emulsion of the organopolysiloxane (4), was added 775 g of pure water, to which 722 g of methyl methacrylate (MMA) was then added dropwise over 3 to 5 hours, while causing a redox reaction between a peroxide and a reducing agent at 30°C to graft-polymerize the acrylate. Thus, an acrylic silicone resin emulsion composition having a non-volatile content of 44.7% was obtained. According to analysis by GPC, it was confirmed that the product thus obtained was an acrylic graft copolymer and the emulsion composition comprised the cationic surfactant. The amount of the surfactant in the emulsion composition is 1.5 g, relative to 100 g of the acrylic silicone resin.

[Preparation Example 4]

To a 2-L polyethylene beaker was added 420 g of octamethylcyclotetrasiloxane, 0.34 g of γ-methacryloxypropylmethyldiethoxysilane ("KBM-502", ex Shin-Etsu Chemical Co., Ltd.), 28 g of Quartamin D86P, 2.1 g of calcium hydroxide and 207 g of ion-exchanged water, and emulsified uniformly by a homomixer. Then, the resulting emulsion was diluted by gradually adding 203 g of ion-exchanged water. The diluted solution was passed through a high-pressure homogenizer twice at a pressure of 300 $kgf/cm^2$ to obtain a uniform white emulsion. The resulting emulsion was transferred to a 2-L glass flask equipped with a stirrer, a thermometer and a reflux condenser, subjected to a polymerization reaction at 50 to 70°C for 24 hours, and neutralized to a pH of 6 to 8 with 19 g of an aqueous 10% solution of acetic acid. A small amount of a sample of the emulsion was dried at 105°C for 3 hours to find a non-volatile content (solid content) of 44.6%. The solid of about 379 g precluding the amount of surfactant in the emulsion was the amount of the organopolysiloxane. The organopolysiloxane thus obtained had a structure represented by the following formula (5):

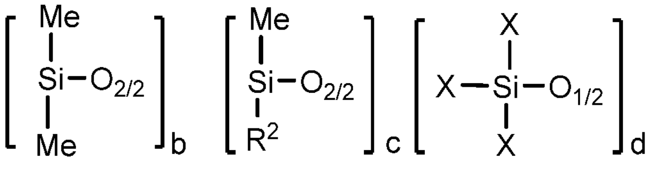
(5)

wherein b is 99.56, c is 0.08, d is 0.36, X is a hydroxyl group or a methyl group and $R^2$ is a γ-methacryloxypropyl group.

[Example 4]

To the emulsion of the organopolysiloxane (5) was added 178 g of pure water, to which 162 g of methyl methacrylate (MMA) was then added dropwise over 3 to 5 hours, while causing a redox reaction between a peroxide

and a reducing agent at 30°C to graft-polymerize the acrylate. Thus, an acrylic silicone resin emulsion composition having a non-volatile content of 45.5% was obtained. According to analysis by GPC, it was confirmed that the product thus obtained was an acrylic graft copolymer and the emulsion composition comprised the cationic surfactant. The amount of the surfactant in the emulsion composition is 3.9 g, relative to 100 g of the acrylic silicone resin.

[Comparative Preparation Example 1]

To a 2-L polyethylene beaker was added 600 g of octamethylcyclotetrasiloxane, 0.6 g of γ-methacryloxypropylmethyldiethoxysilane ("KBM-502", ex Shin-Etsu Chemical Co., Ltd.), and a solution of dissolving 6 g of sodium lauryl sulfate in 54 g of pure water and a solution of dissolving 6 g of dodecylbenzenesulfonic acid in 54 g of pure water, and emulsified uniformly by a homomixer. Then, the resulting emulsion was diluted by gradually adding 470 g of water. The diluted solution was passed through a high-pressure homogenizer twice at a pressure of 300 kgf/$cm^2$ to obtain a uniform white emulsion. The resulting emulsion was transferred to a 2-L glass flask equipped with a stirrer, a thermometer and a reflux condenser, subjected to a polymerization reaction at 55 °C for 24 hours and aged at 20 °C for 24 hours, and neutralized with 12 g of an aqueous 10% solution of a sodium carbonate. A small amount of a sample of the emulsion was dried at 105°C for 3 hours to find a non-volatile content (solid content) of 44.4%. The solid of about 530 g precluding the amount of surfactant in the emulsion was the amount of the organopolysiloxane. The organopolysiloxane thus obtained had a structure represented by the following formula (6):

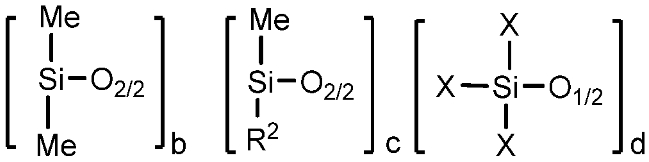

(6)

wherein b is 99.85, c is 0.08, d is 0.07, X is a hydroxyl group or a methyl group and $R^2$ is a γ-methacryloxypropyl group.

[Comparative Example 1]

To the emulsion of the organopolysiloxane (6) was added 509 g of pure water, to which 232 g of methyl methacrylate (MMA) was then added dropwise over 3 to 5 hours, while causing a redox reaction between a peroxide and a reducing agent at 30°C to graft-polymerize the acrylate. Thus, an acrylic silicone resin emulsion composition having a non-volatile content of 45.1% was obtained. The amount of the surfactant in the emulsion composition is 2.3 g, relative to 100 g of the acrylic silicone resin.

[Comparative Preparation Example 2]

To a 2-L polyethylene beaker was added 420 g of octamethylcyclotetrasiloxane, 0.34 g of γ-methacryloxypropylmethyldiethoxysilane ("KBM-502", ex Shin-Etsu Chemical Co., Ltd.), 8.4 g of NIKKOL BC-20, 58.8 g of Catiogen TMS, 2.8 g of Quartamin D86P, 2.1 g of calcium hydroxide, and 342 g of ion-exchanged water, and emulsified uniformly by a homomixer. Then, the resulting emulsion was diluted by gradually adding 150 g of ion-exchanged water. The diluted solution was passed through a high-pressure homogenizer twice at a pressure of 300 kgf/$cm^2$ to obtain a uniform white emulsion. After the resulting emulsion was transferred to a 2-L glass flask equipped with a stirrer, a thermometer and a reflux condenser, subjected to a polymerization reaction at 50 to 70°C for 24 hours, neutralized to a pH of 6 to 8 with 19 g of an aqueous 10% solution of acetic acid. A small amount of a sample of the emulsion was dried at 105°C for 3 hours to find a non-volatile content (solid content) of 39.5%. The solid of about 372 g precluding the amount of surfactant in the emulsion was the amount of the organopolysiloxane. The organopolysiloxane thus obtained had a structure represented by the following formula (7):

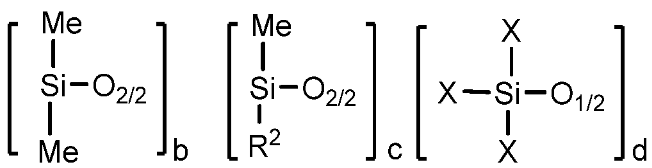

(7)

wherein b is 99.87, c is 0.08, d is 0.05, X is a hydroxyl group or a methyl group and $R^2$ is a γ-methacryloxypropyl group.

[Comparative Example 2]

To the emulsion of the organopolysiloxane (7) was added 929 g of pure water, to which 868 g of methyl methacrylate (MMA) was then added dropwise over 3 to 5 hours, while causing a redox reaction between a peroxide and a reducing agent at 30°C to graft-polymerize the acrylate. Thus, an acrylic silicone resin emulsion composition having a non-volatile content of 45.2% was obtained. The amount of the surfactant in the emulsion composition is 1.3 g, relative to 100 g of the acrylic silicone resin.

The amounts of the raw material compounds and the surfactants used for the emulsion polymerization in the preparation of the organopolysiloxanes (2) to (7) of Preparation Examples 1 to 4 and Comparative Preparation Examples 1 and 2 are as shown in Table 1. The solid content, the pH, and the average particle size of the organopolysiloxane emulsion were determined as explained below. The results are as shown in Table 1.

The weight average molecular weights of the organopolysiloxanes were determined by gel permeation chromatography (GPC), GPC-900, ex JASCO Corporation, with THF as a developing solvent and reduced to polystyrene as a standard substance.

[Table 1]

| | | | Preparation Example | | | | Comparative Preparation Example | |
|---|---|---|---|---|---|---|---|---|
| | | | 1 | 2 | 3 | 4 | 1 | 2 |
| Organopolysiloxane emulsion structural formula No. | | | (2) | (3) | (4) | (5) | (6) | (7) |
| Raw material, Cyclic siloxane (D4), part by mass | | | 100 | 100 | 100 | 100 | 100 | 100 |
| Raw material, γ-Methacryloxypropylmethyl diethoxysilane (KBM-502), part by mass | | | 0.08 | 0.08 | 0.08 | 0.08 | 0.1 | 0.08 |
| Surfactant, part by mass | Cationic surfactant | Catiogen TMS | 3.5 | 3.5 | 3.5 | - | - | 3.5 |
| | | Quartamin D86P | 0.5 | 0.5 | 0.5 | 5 | - | 0.5 |
| | Anionic surfactant | Sodium lauryl sulfate | - | - | - | - | 1 | - |
| | Nonionic surfactant | NIKKOL BC-20 | 2.0 | 2.0 | 2.0 | - | - | 2.0 |
| Solid content (resin content) in the organopolysiloxane emulsion, % | | | 39.6 | 39.6 | 39.6 | 44.6 | 44.4 | 39.5 |
| pH of organopolysiloxane emulsion | | | 6.9 | 6.9 | 6.9 | 6.8 | 7.0 | 7.0 |
| Average particle size of the organopolysiloxane emulsion, nm | | | 210 | 210 | 210 | 230 | 210 | 210 |
| Weight average molecular weight of the organopolysiloxane emulsion | | | 310000 | 310000 | 310000 | 45000 | 250000 | 310000 |

The emulsion compositions obtained in the Examples and the Comparative Examples were evaluated according to the following manners. The results are as shown in Table 2.

[Determination of the Solid Content]

Approximately 1g of each of the emulsion compositions (sample) was placed in an aluminum foil dish having dimensions of 70φ × 12h in mm and accurately weighed, placed in a drier kept at about 105 to 110 degrees C and left for 1 hour. Then, the sample was taken out from the drier, allowed to cool in a desiccator, and weighed. The solid content was calculated by the following formula.

$$R = \frac{T - L}{W - L} \times 100$$

R: Solid content in %
W: Mass in gram of the aluminum foil dish and the undried sample
L: Mass in gram of the aluminum foil dish
T: Mass in gram of the aluminum foil dish and the dried sample

[pH]

The pH of the emulsion composition was determined according to the Japanese Industrial Standards (JIS) Z 8802 at a temperature of 25°C by a pH meter.

[Determination of the average particle size]

0.01 Grams of the sample was weighed. The average particle size (particle size at 50% in the cumulative particle size distribution) was determined by a laser diffraction particle size distribution analyzer (trade name: LA-950V2, ex Horiba) in the conditions of Circulation Flow Rate 2 and Stirring Rate 2.
Determination conditions:

Temperature: 25 ± 1°C
Solvent: ion-exchanged water

[Table 2]

| | Example | | | | Comparative Example | |
|---|---|---|---|---|---|---|
| | 1 | 2 | 3 | 4 | 1 | 2 |
| Organopolysiloxane Emulsion structural formula No. | (2) | (3) | (4) | (5) | (6) | (7) |
| Component of acryl silicone resin emulsion | | | | | | |
| Organopolysiloxane moiety/ Acrylate moiety, mass ratio | 70/30 | 95/5 | 34/66 | 70/30 | 70/30 | 30/70 |
| Solid content in the emulsion, % | 44.5 | 40.7 | 44.7 | 45.5 | 45.1 | 45.2 |
| pH | 7.1 | 6.8 | 6.7 | 7.2 | 7.1 | 7.0 |
| Average particle size, nm | 240 | 230 | 250 | 250 | 240 | 240 |

[Examples 5 to 14 and Comparative Examples 3 to 8]

Fiber treatment agents were prepared by diluting the emulsion compositions prepared in the Examples and Comparative Examples with ion-exchanged water in the parts by mass shown in Table 3 and Table 4. The silicone resin content in each of the fiber treatment agents was set to about 10% or 20%.

Method for treating fiber

Polyester or cotton fiber was dipped in the fiber treatment agent for 10 seconds. Then, the fiber was made impregnated uniformly with the fiber treatment agent with mangle rollers. The fiber was dried at 80°C for 5 minutes, followed by drying at 105°C for 1 minute. The fiber thus treated was evaluated according to the following manners. The results on the polyester fiber are as shown in Table 3. The results on the cotton fiber are as shown in Table 4.

Texture

The fiber was gripped by a hand. If the fiber showed feeling of touch equal to or softer than that of the untreated fiber, its texture was evaluated as "G". If the fiber showed feeling of touch harder than that of the untreated fiber, its

texture was evaluated as "P".

Water contact angle

In an atmosphere of a temperature of 23°C and a humidity of 45%, the treated fiber was contacted with a droplet of 1.8 $\mu$L of ion-exchanged water. Ten seconds after, the contact angle was determined by an automatic contact angle meter CA-V, ex Kyowa Interface Science Co.

Texture and water contact angle after washing

The treated fiber was washed and spin-dried by a commercially available washing machine and, then, dried at 40°C for 16 hours. The texture and the water contact angle of the fiber after washing were evaluated according to the same manner as described above.

[Table 3]

| | | Example | | | | | Comparative Example | | |
|---|---|---|---|---|---|---|---|---|---|
| | | 5 | 6 | 7 | 8 | 9 | 3 | 4 | 5 |
| Component of the fiber treatment agent, parts by mass | MK-206(32%) note 1) | | | | | | 20 | | |
| | CAT-FZ(18%) note 2) | | | | | | 10 | | |
| | Emulsion of Example 1, solid content of 44.5 % | 20 | | | | 20 | | | |
| | Emulsion of Example 2, solid content of 40.7 % | | 20 | | | | | | |
| | Emulsion of Example 3, solid content of 44.7 % | | | 20 | | | | | |
| | Emulsion of Example 4, solid content of 45.5% | | | | 20 | | | | |
| | Emulsion of Com. Ex. 1, solid content of 45.1% | | | | | | | 20 | |
| | Emulsion of Com. Ex. 2, solid content of 45.2% | | | | | | | | 20 |
| | Ion-exchanged water | 70 | 62 | 70 | 70 | 25 | 78 | 70 | 70 |
| | Solid content of fiber treatment agent, % | 10 | 10 | 10 | 10 | 20 | 10 | 10 | 10 |

(continued)

| | | Example | | | | | Comparative Example | | |
|---|---|---|---|---|---|---|---|---|---|
| | | 5 | 6 | 7 | 8 | 9 | 3 | 4 | 5 |
| Evaluation on the polyester after treated with the fiber treatment agent | Amount applied, $g/m^2$ | 35 | 43 | 44 | 38 | 90 | 47 | 50 | 45 |
| | Texture before washing | G | G | G | G | G | P | P | P |
| | Texture after washing | G | G | G | G | G | P | P | P |
| | Water contact angle before the washing, ° | 120 | 122 | 118 | 121 | 116 | <10 | <10 | <10 |
| | Water contact angle after the washing,° | 130 | 132 | 128 | 133 | 131 | <10 | 116 | 120 |

note 1) MK-206 : Methyl Hydrogen Silicone EM, ex Shin-Etsu Chemical Co., Ltd.
note 2) CAT-FZ : Curing catalyst for MK-206, ex Shin-Etsu Chemical Co., Ltd.

[Table 4]

| | | Example | | | | | Comparative Example | | |
|---|---|---|---|---|---|---|---|---|---|
| | | 10 | 11 | 12 | 13 | 14 | 6 | 7 | 8 |
| Component of the fiber treatment agent, parts by mass | MK-206(32%) note 1) | | | | | | 20 | | |
| | CAT-FZ(18%) note 2) | | | | | | 10 | | |
| | Emulsion of Example 1, solid content of 44.5 % | 20 | | | | 20 | | | |
| | Emulsion of Example 2, solid content of 40.7 % | | 20 | | | | | | |
| | Emulsion of Example 3, solid content of 44.7 % | | | 20 | | | | | |
| | Emulsion of Example 4, solid content of 45.5% | | | | 20 | | | | |
| | Emulsion of Com. Ex. 1, solid content of 45.1% | | | | | | | 20 | |
| | Emulsion of Com. Ex. 2, solid content of 45.2% | | | | | | | | 20 |
| | Ion-exchanged water | 70 | 62 | 70 | 70 | 25 | 78 | 70 | 70 |
| | Solid content of fiber treatment agent, % | 10 | 10 | 10 | 10 | 20 | 10 | 10 | 10 |

(continued)

| | | Example | | | | | Comparative Example | | |
|---|---|---|---|---|---|---|---|---|---|
| | | 10 | 11 | 12 | 13 | 14 | 6 | 7 | 8 |
| Evaluation on the polyester after treated with the fiber treatment agent | Amount applied, $g/m^2$ | 65 | 68 | 64 | 58 | 123 | 85 | 62 | 63 |
| | Texture before washing | G | G | G | G | G | P | P | P |
| | Texture after washing | G | G | G | G | G | P | P | P |
| | Water contact angle before the washing, ° | 115 | 106 | 110 | 111 | 102 | <10 | <10 | <10 |
| | Water contact angle after the washing,° | 120 | 119 | 124 | 119 | 109 | <10 | 105 | 110 |

note 1) MK-206 : Methyl Hydrogen Silicone EM, ex Shin-Etsu Chemical Co., Ltd.
note 2) CAT-FZ : Curing catalyst for MK-206, ex Shin-Etsu Chemical Co., Ltd.

As seen in the Tables 3 and 4, the fiber treatment agents prepared from the emulsion composition of Comparative Example 1 with the anionic surfactant provided a fiber which had a poor texture both before and after washing and a poor washing durability (Comparative Examples 4 and 7). The fiber treatment agents prepared from the emulsion composition of Comparative Example 2 with a too large mass ratio of the acrylate moiety provided a fiber which had a poor texture both before and after washing and a poor washing durability (Comparative Examples 5 and 8). The conventional fiber treatment agent provided a fiber which had a poor texture both before and after washing and an insufficient water repellency.

On the other hand, the fiber treated with the fiber treatment agents prepared from the present emulsion composition had a good texture (feeling of touch and softness) both before and after washing and an excellent water repellency and washing durability.

## Claims

1. An emulsion composition comprising the following components (A) and (B):

(A) a (meth)acrylic silicone resin which is a graft polymer of an organopolysiloxane having siloxane units represented by the following formula (1) wherein some of group $R^2$ is graft-polymerized with a (meth)acrylate ester, whereby the mass ratio of the organopolysiloxane part to the (meth)acrylate ester part is 34:66 to 99:1;

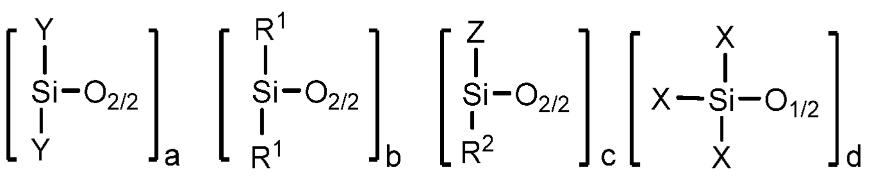

(1)

wherein $R^1$ is, independently of each other, a substituted or unsubstituted, monovalent hydrocarbon group having 1 to 20 carbon atoms; $R^2$ is, independently of each other, an alkenyl group having 2 to 6 carbon atoms or an alkyl group having 1 to 6 carbon atoms in which a part of the hydrogen atoms each bonded to a carbon atom is substituted with a mercapto group, a vinyl group, an acryloxy group, or a methacryloxy group; X is, independently of each other, a substituted or unsubstituted, monovalent hydrocarbon group having 1 to 20 carbon atoms, an alkoxy group having 1 to 20 carbon atoms, or a hydroxyl group; Y is, independently of each other, the group defined for X or a group represented by $-[O-Si(X)_2]_g-X$ wherein g is an integer of 1 to 200, wherein at least two of the groups represented by X and Y are a hydroxyl group; Z is, independently of each

other, an alkyl group having 1 to 4 carbon atoms, an alkoxy group having 1 to 4 carbon atoms, or a hydroxyl group; a is a number of 0 or more; b is a number such that the percentage of b per total of a to d is from 45% to less than 100%; c is a number such that the percentage of c per total of a to d is more than 0% to 5% or less; and d is a number such that the percentage of d per total of a to d is from 0% to 50%; and the binding order of the siloxane units in the square brackets is not limited; and
(B) a cationic surfactant.

**2.** The emulsion composition according to claim 1, wherein the amount of the cationic surfactant (B) is 1 to 15 parts by mass, relative to 100 parts by mass of the (meth)acrylic silicone resin (A).

**3.** The emulsion composition according to claim 1 or 2, wherein $R^1$ in the formula (1) is, independently of each other, a linear, branched or cyclic alkyl group having 1 to 20 carbon atoms, or an aryl group having 6 to 20 carbon atoms; X is, independently of each other, a linear, branched or cyclic alkyl group having 1 to 20 carbon atoms, an aryl group having 6 to 20 carbon atoms, an alkoxy group having 1 to 20 carbon atoms, or a hydroxyl group.

**4.** The emulsion composition according to any one of claims 1 to 3, wherein the (meth)acrylate ester is an alkyl (meth)acrylate ester in which the alkyl group has 1 to 6 carbon atoms.

**5.** A fiber treatment agent comprising the emulsion composition according to any one of claims 1 to 4.

**6.** Natural or chemical fiber treated with the fiber treatment agent according to claim 5.

**7.** A method for preparing an emulsion composition comprising a (meth)acrylic silicone resin, wherein the method comprises a step of subjecting an organopolysiloxane in an organopolysiloxane emulsion (a) comprising an organopolysiloxane represented by the following formula (1) and a cationic surfactant (B) to graft-polymerization with a (meth)acrylate (b) in an amount such that the mass ratio of the oraganopolysiloxane and the (meth)acrylate ester is 34:66 to 99:1 to obtain an emulsion composition comprising the (meth)acrylic silicone resin,

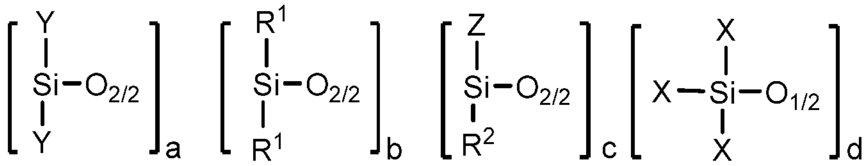
(1)

wherein $R^1$ is, independently of each other, a substituted or unsubstituted, monovalent hydrocarbon group having 1 to 20 carbon atoms; $R^2$ is, independently of each other, an alkenyl group having 2 to 6 carbon atoms or an alkyl group having 1 to 6 carbon atoms in which a part of the hydrogen atoms each bonded to a carbon atom is substituted with a mercapto group, a vinyl group, an acryloxy group, or a methacryloxy group; X is, independently of each other, a substituted or unsubstituted, monovalent hydrocarbon group having 1 to 20 carbon atoms, an alkoxy group having 1 to 20 carbon atoms, or a hydroxyl group; Y is, independently of each other, the group defined for X or a group represented by $-[O-Si(X)_2]_g-X$ wherein g is an integer of 1 to 200, wherein at least two of the groups represented by X and Y are a hydroxyl group; Z is, independently of each other, an alkyl group having 1 to 4 carbon atoms, an alkoxy group having 1 to 4 carbon atoms, or a hydroxyl group; a is a number of 0 or more; b is a number such that the percentage of b per total of a to d is from 45% to less than 100%; c is a number such that the percentage of c per total of a to d is more than 0% to 5% or less; and d is a number such that the percentage of d per total of a to d, is from 0% to 50%; and the binding order of the siloxane units in the square brackets is not limited.

**8.** The method according to claim 7, further comprising a step of emulsion-polymerizing, in the presence of the cationic surfactant, 100 parts by mass of a cyclic organosiloxane (a-1) with 0.01 to 10 parts by mass of a silane coupling agent (a-2) to obtain the organopolysiloxane emulsion (a) before the graft-polymerization.

**9.** The method according to claim 8, wherein the amount of the cationic surfactant is 0.1 to 20 parts by mass, relative to 100 parts by mass of the cyclic organosiloxane (a-1).

## INTERNATIONAL SEARCH REPORT

International application No.
PCT/JP2020/006663

A. CLASSIFICATION OF SUBJECT MATTER
Int.Cl. C08F283/12(2006.01)i, C08K5/19(2006.01)i, C08L51/08(2006.01)i, D06M13/463(2006.01)i, D06M15/643(2006.01)i
FI: C08L51/08, D06M15/643, D06M13/463, C08F283/12, C08K5/19
According to International Patent Classification (IPC) or to both national classification and IPC

B. FIELDS SEARCHED
Minimum documentation searched (classification system followed by classification symbols)
Int.Cl. C08F283/12, D06M13/463, C08K5/19, C08L51/08, D06M15/643

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 2000-7740 A (GE TOSHIBA SILICONES CO., LTD.) 11.01.2000 (2000-01-11), claims, paragraphs [0005]-[0029], [0035]-[0045] | 1-7<br>8, 9 |
| A | JP 2002-38377 A (DOW CORNING TORAY SILICON CO., LTD.) 06.02.2002 (2002-02-06) | 1-9 |
| A | JP 7-173776 A (SHIN ETSU CHEMICAL CO., LTD.) 11.07.1995 (1995-07-11) | 1-9 |
| A | JP 9-217282 A (TOSHIBA SILICONES CO., LTD.; JAPAN SYNTHETIC RUBBER CO., LTD.) 19.08.1997 (1997-08-19) | 1-9 |
| A | JP 6-92825 A (MITSUBISHI PETROCHEM CO., LTD.) 05.04.1994 (1994-04-05) | 1-9 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14.04.2020 | 21.04.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/006663

C (Continuation). DOCUMENTS CONSIDERED TO BE RELEVANT

| Category* | Citation of document, with indication, where appropriate, of the relevant passages | Relevant to claim No. |
|---|---|---|
| A | JP 4-89813 A (DOW CORNING TORAY SILICON CO., LTD.) 24.03.1992 (1992-03-24) | 1-9 |
| A | JP 2-210073 A (NISSIN CHEMICAL INDUSTRY CO., LTD.) 21.08.1990 (1990-08-21) | 1-9 |
| A | JP 2016-138242 A (NISSIN CHEMICAL INDUSTRY CO., LTD.) 04.08.2016 (2016-08-04) | 1-9 |
| A | WO 2017/073194 A1 (NISSIN CHEMICAL INDUSTRY CO., LTD.) 04.05.2017 (2017-05-04) | 1-9 |
| A | CN 106519144 A (GUANGZHOU SHINE POLYMER TECHNOLOGY CO., LTD.) 22.03.2017 (2017-03-22) | 1-9 |

Form PCT/ISA/210 (second sheet) (January 2015)

**INTERNATIONAL SEARCH REPORT**
Information on patent family members

International application No.
PCT/JP2020/006663

| | | |
|---|---|---|
| JP 2000-7740 A | 11.01.2000 | (Family: none) |
| JP 2002-38377 A | 06.02.2002 | US 2002/0035186 A1<br>EP 1178150 A1<br>CA 2354764 A<br>KR 10-2002-0011116 A<br>CN 1338540 A |
| JP 7-173776 A | 11.07.1995 | (Family: none) |
| JP 9-217282 A | 19.08.1997 | (Family: none) |
| JP 6-92825 A | 05.04.1994 | US 5362485 A<br>EP 582152 A2<br>KR 10-1994-0001875 A |
| JP 4-89813 A | 24.03.1992 | US 5171638 A<br>EP 469613 A2<br>CA 2048248 A<br>CA 2048248 A1 |
| JP 2-210073 A | 21.08.1990 | (Family: none) |
| JP 2016-138242 A | 04.08.2016 | US 2016/0177408 A1<br>CN 105713503 A<br>KR 10-2016-0076455 A<br>TW 201632595 A |
| WO 2017/073194 A1 | 04.05.2017 | CN 108350233 A |
| CN 106519144 A | 22.03.2017 | WO 2018/040297 A1 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000096454 A
- JP 57171769 A
- JP 2004010732 A